# EUROPÄISCHE PATENTANMELDUNG

(11) **EP 4 082 728 A2**
(43) Veröffentlichungstag der Anmeldung: **02.11.2022**
(21) Anmeldenummer: 22166810.6
(22) Anmeldetag: 05.04.2022
(51) Int. Cl.: B25J 19/02, B25J 5/00, B25J 13/08

(54) **MOBILER KOMMISSIONIERROBOTER**

(30) Priorität: 09.04.2021 DE 102021108906
(71) Anmelder: STILL GmbH, 22113 Hamburg (DE); Linde Material Handling GmbH, 63743 Aschaffenburg (DE)
(72) Erfinder: KRUMBHOLZ, Peter, 63869 Jakobsthal (DE); GROH, Jonas, 63743 Aschaffenburg (DE); HÜBNER, Rainer, 22085 Hamburg (DE); PÜTZ, Daniel, 22049 Hamburg (DE)
(74) Vertreter: Patentship Patentanwaltgesellschaft

(57) **Zusammenfassung**

Die Erfindung betrifft einen mobilen Kommissionierroboter (R) zur automatischen Kommissionierung von Objekten (9) mit einem Lasthandhabungsmanipulator (M), der einen Roboterarm (4, 5, 6, 7) und ein mit dem Roboterarm (4, 5, 6, 7) in Verbindung stehendes Aufnahmewerkzeug (8) zur Aufnahme der Objekte (9) umfasst. Es wird vorgeschlagen, dass der Lasthandhabungsmanipulator (M) mindestens eine Lastwaage (21) aufweist.

## Beschreibung

Die Erfindung betrifft einen mobilen Kommissionierroboter zur automatischen Kommissionierung von Objekten mit einem Lasthandhabungsmanipulator, der einen Roboterarm und ein mit dem Roboterarm in Verbindung stehendes Aufnahmewerkzeug zur Aufnahme der Objekte umfasst.

Unter Kommissionierung versteht man alle Methoden zur Zusammenstellung von bestimmten Objekten, insbesondere von Gütern in Warenlagern oder Warenverteilzentren, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Packstücke als zu kommissionierende Objekte von autonom betriebenen Transportfahrzeugen von einer Quellposition, z.B. einer Quellpalette, aufgenommen und auf einer auf dem Transportfahrzeug transportierten Zielpalette abgesetzt. Insbesondere werden hierzu mobile Kommissionierroboter verwendet, die die Packstücke selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein.

Mobile Kommissionierroboter weisen einen Lasthandhabungsmanipulator auf, der meist einen Hubmast oder eine andere Hubeinrichtung zur vertikalen Positionierung des Aufnahmewerkzeugs im Regal und auf der Zielpalette umfasst. Dabei werden für den vollautonomen, mobilen Kommissionierprozess häufig Sonderkinematiken des Roboterarms eingesetzt. Roboter mit Standardkinematiken (insbesondere 6-Achs-Industrieroboter) sind oftmals zu schwer, nicht für den mobilen Einsatz konzipiert und haben kinematische Einschränkungen, die einen Einsatz in diesem Gebiet erschweren.

Vorteilhafter sind Roboterarme mit flachen Kinematiken, die an einem Hubmast vertikal verfahren werden können. Derartige Roboterarme weisen mehrere flach, d.h. horizontal, angeordnete Armelemente auf, die einen zylindrischen Greifraum aufspannen, der sich für das Arbeiten in engen Lagerhäusern bestens eignet.

Mobile Kommissionierroboter mit flachen Armkinematiken sind beispielsweise aus der DE 10 2017 129 468 A1 und der DE 10 2017 130 577 A1 bekannt.

Bei der Kommissionierung mittels mobiler Kommissionierroboter müssen Fehlerquellen weitgehend ausgeschlossen werden, um eine möglichst hohe Produktivität und Verfügbarkeit des Kommissioniersystems zu gewährleisten. Insbesondere sollte ein Greifen von falschen Objekten oder von falschen Mengen von Objekten ausgeschlossen werden. Daher ist eine Kontrolle des Greifvorgangs wünschenswert.

Der vorliegenden Erfindung liegt die Aufgabe zugrunde, einen mobilen Kommissionierroboter der eingangs genannten Art so auszugestalten, dass eine Verringerung der Fehlerquote beim Kommissionieren ermöglicht wird.

Diese Aufgabe wird erfindungsgemäß dadurch gelöst, dass der Lasthandhabungsmanipulator mindestens eine Lastwaage aufweist.

Mit der Lastwaage können die gegriffenen Objekte gewogen werden, so dass Fehlgriffe von falschen oder fehlerhaften Objekten oder einer falschen Menge von Objekten erkannt werden können. Dabei sollte die Lastwaage derart angeordnet sein, dass das tatsächliche Gewicht der mit dem Aufnahmewerkzeug aufgenommenen Objekte ermittelt werden kann.

Hierzu ist die Lastwaage gemäß einer bevorzugten Ausgestaltung der Erfindung in das Aufnahmewerkzeug integriert.

Dabei kann die Lastwaage gemäß einer Ausgestaltungsform der Erfindung auch mit einem Wechselsystem von Aufnahmewerkzeugen, insbesondere einem Greifer-Wechselsystem, kombiniert sein. Bei solchen Systemen weist der Lasthandhabungsmanipulator eine Schnittstelle zwischen dem Roboterarm und mindestens einem abnehmbaren Aufnahmewerkzeugteil des Aufnahmewerkzeugs oder zwischen einem fest montierten und einem abnehmbaren Aufnahmewerkzeugteil des Aufnahmewerkzeugs auf. Auf diese Weise können unterschiedliche Aufnahmewerkzeuge, insbesondere Greifer mit unterschiedlicher Größe oder basierend auf unterschiedlicher Technologie, mit dem Lasthandhabungsmanipulator aufgenommen werden.

Vorzugsweise ist dabei die Lastwaage in das abnehmbare Aufnahmewerkzeugteil des Aufnahmewerkzeugs integriert. Dies hat den Vorteil, dass die Lastwaage auf das spezielle Aufnahmewerkzeug, insbesondere auf einen speziellen Greifertyp, beispielsweise hinsichtlich eines bestimmten Gewichtsbereichs abgestimmt werden kann.

Die Lastwaage kann aber auch oberhalb der Schnittstelle, also fahrzeugseitig, untergebracht sein. Dies hat den Vorteil, dass die Lastwaage auch beim Wechseln der abnehmbaren Aufnahmewerkzeugteile nur einmal verbaut werden muss, wodurch sich eine Kosteneinsparung ergibt.

Wird bei einer derartigen fahrzeugseitigen Anordnung der Lastwaage zu einem anderen Aufnahmewerkzeug gewechselt, so muss das Gewicht des aktuellen Aufnahmewerkzeugs bei der Messung durch die Lastwaage berücksichtigt werden. Hierzu kann das Gewicht des Aufnahmewerkzeugs am Aufnahmewerkzeug selbst, beispielsweise in Form eines RFID-Tags, hinterlegt sein oder in einer Datenbank abgerufen werden. Auf diese Weise kann auch das Aufnahmewerkzeug selbst, zum Beispiel auf Beschädigungen, überprüft werden. Alternativ kann eine Tara-Funktion in die Gewichtsauswertung der Lastwaage integriert werden.

Vorzugsweise ist die Lastwaage hierzu in das fest montierte Aufnahmewerkzeugteil des Aufnahmewerkzeugs integriert.

Eine weitere vorteilhafte Ausgestaltung der Erfindung sieht vor, dass die Lastwaage in den Roboterarm integriert ist.

In einer weiter entwickelten Ausführungsform des mobilen Kommissionierroboters ist zwischen dem Roboterarm und dem Aufnahmewerkzeug ein Ausgleichselement vorgesehen, das Relativbewegungen zwischen dem Roboterarm auf der einen Seite und dem Aufnahmewerkzeug auf der anderen Seite ermöglicht. Mit dem Ausgleichselement wird eine Nachgiebigkeit des Aufnahmewerkzeugs für mehrere Freiheitsgrade erreicht. Dadurch können Toleranzen bei den Zielpositionen ausgeglichen werden. Dabei ist das Ausgleichselement vorzugsweise für eine Nachgiebigkeit in mindestens drei Freiheitsgraden ausgelegt, nämlich in den drei Freiheitsgraden der Raumrichtungen x (horizontale Längsrichtung), y (horizontale Querrichtung) und z (vertikale Richtung). Zusätzlich kann das Ausgleichselement auch für einen vierten Freiheitsgrad, nämlich der Drehung Ψ um die z-Achse ausgelegt sein.

Gemäß einer bevorzugten Weiterbildung der Erfindung ist die Lastwaage in das Ausgleichselement integriert. In solchen Ausgleichselementen sind häufig Nachgiebigkeiten, auch in vertikaler z-Richtung, integriert. Wenn die Federkennlinie dieser elastischen Systeme des Ausgleichselements sauber bestimmt werden kann, kann daraus auch ein Wiegesignal herausgerechnet werden.

Um das tatsächliche Gewicht auch bei außermittig gegriffenen Objekten möglichst genau bestimmen zu können, weist die Lastwaage zweckmäßigerweise mehrere Wägezellen, insbesondere mindestens drei Wägezellen, auf. Somit können auftretende Lastmomente herausgerechnet werden. Insbesondere wird vorgeschlagen, mit drei Wägezellen zu arbeiten, um mit Abweichungen des Lastschwerpunktes des Objekts vom Zentrum des Aufnahmewerkzeugs, dem so genannten Tool Center Point, in den beiden Raumrichtungen x und y umgehen zu können.

Bevorzugt verfügt die Lastwaage über eine optische Sensorik, mit der eine Verformung und/oder ein Einfedern eines elastischen Bauteils, insbesondere des Roboterarms und/oder des Aufnahmewerkzeugs und/oder des Ausgleichselements, erkannt werden kann.

Zweckmäßigerweise steht die Lastwaage mit einer Steuereinheit in Wirkverbindung. Dabei ist die Steuereinheit vorteilhafterweise am Lasthandhabungsmanipulator angeordnet. Sie kann aber auch in eine Fahrzeugsteuerungseinheit des mobilen Kommissionierroboters integriert sein.

Die Steuereinheit ist bevorzugt dazu eingerichtet, Messdaten der Lastwaage mit hinterlegten Stammdaten der Objekte zu vergleichen und bei einer Abweichung der Messdaten von den Stammdaten eine Reaktionsfunktion des mobilen Kommissionierroboters einzuleiten, insbesondere eine Fehlermeldung auszugeben.

Dabei ist in der Steuereinheit zweckmäßigerweise ein Toleranzbereich einer Abweichung der Messdaten der Lastwaage von den Stammdaten der Objekte hinterlegt. Die Stammdaten kann die Steuereinheit von einem übergeordneten System erhalten, beispielsweise von einem Warenmanagementsystem. Abweichungen können zum Beispiel durch in einer Verpackung, insbesondere einem Karton, des Objekts aufgenommene Luftfeuchte oder durch herstellungsbedingte Schwankungen eines Füllstandes eines Objekts entstehen. Wird der Toleranzbereich der Abweichung überschritten, so leitet die Steuereinheit die Reaktionsfunktion des mobilen Kommissionierroboters ein, beispielsweise sendet die Steuereinheit eine Fehlermeldung an ein übergeordnetes System aus.

Eine weitere vorteilhafte Ausgestaltung der Erfindung sieht vor, dass die Steuereinheit dazu eingerichtet ist, aus Messdaten der Lastwaage einen Lastschwerpunkt der Objekte zu ermitteln. Wird das aufgenommene Objekt im Stillstand verwogen, so kann während einer Beschleunigung des Objekts beim Verfahren des Roboterarms, zum Beispiel von einer Quellpalette zu einer Zielpalette, auch die Schwerpunktslage des aufgenommenen Objekts in vertikaler z-Richtung ermittelt werden.

Die Verwiegung des Objekts sollte unmittelbar nach dem Aufnehmen des Objekts durchgeführt werden, sowie auch noch einmal unmittelbar vor dem Ablegen des Objekts an einem Zielort, beispielsweise einer Zielpalette. Auch eine Verwiegung in der Bewegung kann sinnvoll sein, insbesondere zur Bestimmung der Schwerpunktslage des aufgenommene Objekts. Mit einer Verwiegung des aufgenommenen Objekts in der Bewegung kann zudem ein Herunterfallen des Objekts während der Manipulation durch den Kommissionierroboter detektiert werden.

Gemäß einer Weiterbildung des Erfindungsgedankens ist die Steuereinheit dazu eingerichtet, aus Messdaten der Lastwaage Schwingungen des Lasthandhabungsmanipulators zu erkennen und diese durch gezielte Ansteuerung des Lasthandhabungsmanipulators und/oder des mobilen Kommissionierroboters zu kompensieren. Die Messdaten der Lastwaage können somit zur Erkennung von Schwingungen des Roboterarms oder des vom Aufnahmewerkzeug aufgenommenen Objekts genutzt werden. Die Steuereinheit kann auf die erkannten Schwingungen reagieren, indem sie beispielsweise das Fahrprofil des Kommissionierroboters hinsichtlich Beschleunigungen, Geschwindigkeiten, Pausenzeiten etc. anpasst. Dies sollte insbesondere kurz vor dem Ablegeprozess des Objekts erfolgen.

Eine weitere bevorzugte Ausgestaltung der Erfindung sieht vor, dass die Steuereinheit dazu eingerichtet ist, aus Messdaten der Lastwaage Kollisionen des Lasthandhabungsmanipulators und/oder des mobilen Kommissionierroboters mit Hindernissen zu erkennen. Dabei werden die Messdaten der Lastwaage genutzt, um ungewollte und/oder ungeplante Kontakte zu detektieren. Bei einem Kontakt des Objekts mit einem Hindernis verändert sich insbesondere der Lastschwerpunkt, so dass die Steuereinheit aus der Veränderung der Messdaten auf eine ungewollte oder ungeplante Kollision schließen kann und eine entsprechende Reaktionsfunktion des mobilen Kommissionierroboters einleiten kann, wobei zum Beispiel eine Warnmeldung ausgegeben wird und/oder der Kommissionierroboter angehalten wird.

In entsprechender Weise kann auch ein versehentliches Greifen von zwei nebeneinander angeordneten Objekten, insbesondere nebeneinander stehenden Paketen, detektiert und verhindert werden.

Die Steuereinheit kann auch dazu eingerichtet sein, aus Messdaten der Lastwaage ein Herunterfallen der Objekte während der Manipulation zu erkennen.

Eine andere vorteilhafte Ausgestaltung sieht vor, dass die Steuereinheit dazu eingerichtet ist, aus Messdaten der Lastwaage fehlerhafte Objekte, insbesondere eine Leckage eines Packstücks und/oder einen fehlerhaften Füllstand eines Packstücks, zu erkennen.

Ebenso kann die Steuereinheit dazu eingerichtet sein, aus Messdaten der Lastwaage ein Absetzen der Objekte an einer Zielposition zu erkennen. Es kann somit beispielsweise festgestellt werden, wann ein Paket auf einer Zielpalette abgestellt wurde.

Gemäß einer Weiterbildung der Erfindung ist vorgesehen, dass die Steuereinheit über ein Computerprogramm mit einem selbstlernenden Algorithmus verfügt, der eine Anpassung der hinterlegten Stammdaten der Objekte an aktuelle Daten ermöglicht. Somit können die Stammdaten, die beispielsweise ein Lager-Betreiber vom Hersteller der Packstücke erhält, an die Realität angepasst werden. Dies ermöglicht, zukünftig einen engeren Toleranzbereich anzuwenden.

Die Erfindung eignet sich nicht nur für mobile Kommissionierroboter mit flachen Armkinematiken, sondern auch für Ausführungen mit Sechs-Achs-Industrie-Roboter-Kinematiken oder anderen Armkinematiken.

Weitere Vorteile und Einzelheiten der Erfindung werden anhand des in der schematischen Figur dargestellten Ausführungsbeispiels näher erläutert. Hierbei zeigt die
- Figur: einen erfindungsgemäßen mobilen Kommissionierroboter mit Handhabungsmanipulator und Ausgleichselement vor einer Zielpalette in der Seitenansicht.

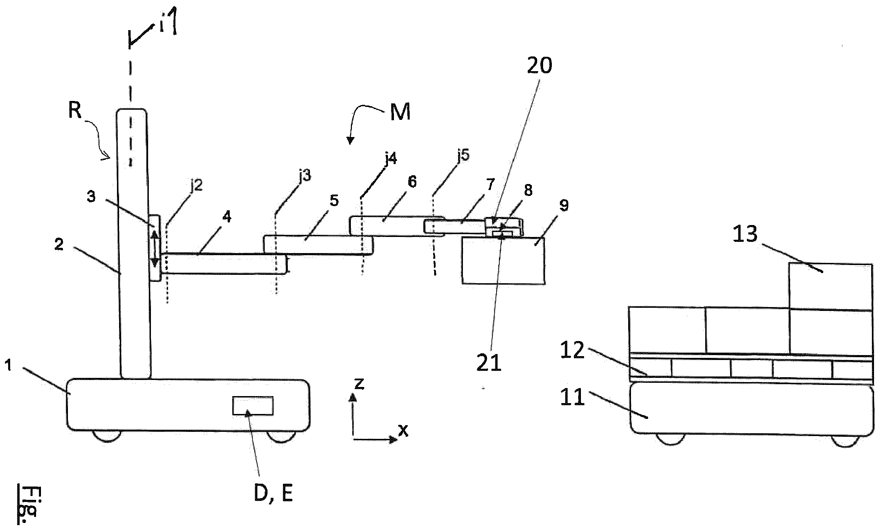

In Figur 1 ist ein erfindungsgemäßer mobiler Kommissionierroboter R mit einem Handhabungsmanipulator M und einem gegebenenfalls vorhandenem Ausgleichselement 20 vor einem als Zielpalette 12 ausgebildeten Zielladungsträger 12 in der Seitenansicht dargestellt. Die Zielpalette 12 ist auf einem Begleitfahrzeug 11 angeordnet. Auf der Zielpalette 12 sind Packstücke 13 abgelegt. Es versteht sich, dass alternativ die Zielpalette auch auf dem Kommissionierroboter R mitgeführt werden kann.

Der mobile Kommissionierroboter R weist eine flache Armkinematik eines einen Roboterarm umfassenden Lasthandhabungsmanipulators M nach dem so genannten Scara-Prinzip auf. Diese Bauform ist durch ein autonomes Fahrzeug 1 mit einem vertikalen Hubmast 2 und einem daran höhenverfahrbaren Schlitten 3 gekennzeichnet, an dem die flache Kinematik befestigt ist. Der Hubmast 2 stellt die erste vertikale Achse i1 des Lasthandhabungsmanipulators M dar. Am Schlitten 3 ist über die vertikale Achse i2 das erste Armelement 4 der Armkinematik befestigt. An diesem ist über die vertikale Achse i3 das Armelement 5 befestigt. Dort wiederum ist über die vertikale Achse i4 das Armelement 6 und daran über die vertikale Achse i5 das vorderste Armelement 7 befestigt, das das als Greifer 8 ausgebildete Aufnahmewerkzeug 8 trägt. Die Armelemente 4 bis 7 bilden somit einen Roboterarm mit vertikalen Achsen i2 bis i5. Der Greifer 8 ist im vorliegenden Beispiel als Vakuumgreifer 8 ausgeführt, der beispielsweise als Packstücke 9 ausgebildete Objekte 9 von oben greift.

Das Aufnahmewerkzeug 8 ist an dem Roboterarm, beispielsweise dem vordersten Armelement 7, angeordnet. Sofern das Ausgleichselement 20 vorgesehen ist, ist das Ausgleichselement 20 an dem vordersten Armelement 7 des Roboterarms befestigt und das Aufnahmewerkzeug 8 an dem Ausgleichselement 20 angeordnet. Durch das Ausgleichselement 20 wird eine Nachgiebigkeit für mehrere Freiheitsgrade ermöglicht.

Der Kommissionierroboter R verfügt außerdem über eine Fahrzeugsteuerungseinheit D, die auch die Nachgiebigkeit des Ausgleichselements 20 aktiv freigibt oder eine Arretierung des Ausgleichselements 20 einleitet.

Erfindungsgemäß ist im Aufnahmewerkzeug 8 die Lastwaage 21 integriert. Mit der Lastwaage 21 können die gegriffenen Objekte 9 gewogen werden.

Die Lastwaage 21 steht mit einer Steuereinheit E in Wirkverbindung. Die Steuereinheit E ist beispielsweise in die Fahrzeugsteuerungseinheit D des mobilen Kommissionierroboters R integriert.

Alternativ kann die Lastwaage 21 in das Ausgleichselement 20 intergiert werden oder in den Roboteram, beispielsweise das vorderste Armelement 7, integriert werden.

Mit der Lastwaage 21 können die mit dem Aufnahmewerkzeug 8 gegriffenen Objekte 9 gewogen werden und das von der Lastwaage 21 ermittelte Gewicht des gegriffenen Objekts 9 mit den Stammdaten des Objekts 9 verglichen werden, die die Steuereinheit E aus einem übergeordneten System, beispielsweise einem Warenmanagementsystem erhält. Weicht das von der Lastwaage 21 gemessene Gewichts des gegriffenen Objekts 9 von den Stammdaten des Objekts 9 ab, erzeugt die Steuereinheit E eine Reaktionsfunktion des mobilen Kommissionierroboters R, beispielsweise eine Fehlermeldung, die an das übergeordnete System gesendet wird. Das Aufnehmen von falschen oder fehlerhaften Objekten 9 oder von einer falschen Menge von Objekten 9 kann somit sicher erkannt werden.

Die Erfindung ist nicht auf einen mobilen Kommissionierroboter R mit dem Ausgleichselement 20 beschränkt. Alternativ kann der mobilen Kommissionierroboter R auch ohne Ausgleichselement 20 ausgeführt sein, wobei das Aufnahmewerkzeug 8 an dem Roboterarm, beispielsweise dem vordersten Armelement 7, angeordnet ist. Die Lastwaage 21 kann hierbei in dem Roboterarm, beispielsweise in das vorderste Armelement 7, oder in das Aufnahmewerkzeug 8 integriert sein.

## Patentansprüche

1. Mobiler Kommissionierroboter (R) zur automatischen Kommissionierung von Objekten (9) mit einem Lasthandhabungsmanipulator (M), der einen Roboterarm (4, 5, 6, 7) und ein mit dem Roboterarm (4, 5, 6, 7) in Verbindung stehendes Aufnahmewerkzeug (8) zur Aufnahme der Objekte (9) umfasst, **dadurch gekennzeichnet, dass** der Lasthandhabungsmanipulator (M) mindestens eine Lastwaage (21) aufweist.

2. Mobiler Kommissionierroboter (R) nach Anspruch 1, **dadurch gekennzeichnet, dass** die Lastwaage (21) in das Aufnahmewerkzeug (8) integriert ist.

3. Mobiler Kommissionierroboter (R) nach Anspruch 1 oder 2, **dadurch gekennzeichnet, dass** der Lasthandhabungsmanipulator (M) eine Schnittstelle zwischen dem Roboterarm (4, 5, 6, 7) und mindestens einem abnehmbaren Aufnahmewerkzeugteil des Aufnahmewerkzeugs (8) oder zwischen einem fest montierten und einem abnehmbaren Aufnahmewerkzeugteil des Aufnahmewerkzeugs (8) aufweist.

4. Mobiler Kommissionierroboter (R) nach Anspruch 3, **dadurch gekennzeichnet, dass** die Lastwaage (21) in das abnehmbare Aufnahmewerkzeugteil des Aufnahmewerkzeugs (8) integriert ist.

5. Mobiler Kommissionierroboter (R) nach Anspruch 3, **dadurch gekennzeichnet, dass** die Lastwaage (21) in das fest montierte Aufnahmewerkzeugteil des Aufnahmewerkzeugs (8) integriert ist.

6. Mobiler Kommissionierroboter (R) nach einem der Ansprüche 1 bis 5, **dadurch gekennzeichnet, dass** die Lastwaage (21) in den Roboterarm (4, 5, 6, 7) integriert ist.

7. Mobiler Kommissionierroboter (R) nach einem der Ansprüche 1 bis 6, **dadurch gekennzeichnet, dass** zwischen dem Roboterarm (4, 5, 6, 7) und dem Aufnahmewerkzeug (8) ein Ausgleichselement (20) vorgesehen ist, das Relativbewegungen zwischen dem Roboterarm (4, 5, 6, 7) auf der einen Seite und dem Aufnahmewerkzeug (8) auf der anderen Seite ermöglicht.

8. Mobiler Kommissionierroboter (R) nach Anspruch 7, **dadurch gekennzeichnet, dass** die Lastwaage (21) in das Ausgleichselement (20) integriert ist.

9. Mobiler Kommissionierroboter (R) nach einem der Ansprüche 1 bis 8, **dadurch gekennzeichnet, dass** die Lastwaage (21) mehrere Wägezellen, insbesondere mindestens drei Wägezellen, aufweist.

10. Mobiler Kommissionierroboter (R) nach einem der Ansprüche 1 bis 9, **dadurch gekennzeichnet, dass** die Lastwaage (21) über eine optische Sensorik verfügt, mit der eine Verformung und/oder ein Einfedern eines elastischen Bauteils erkannt werden kann.

11. Mobiler Kommissionierroboter (R) nach einem der Ansprüche 1 bis 10, **dadurch gekennzeichnet, dass** die Lastwaage (21) mit einer Steuereinheit (E) in Wirkverbindung steht.

12. Mobiler Kommissionierroboter (R) nach Anspruch 11, **dadurch gekennzeichnet, dass** die Steuereinheit (E) am Lasthandhabungsmanipulator (M) angeordnet ist.

13. Mobiler Kommissionierroboter (R) nach Anspruch 11, **dadurch gekennzeichnet, dass** die Steuereinheit (E) in eine Fahrzeugsteuerungseinheit (D) des mobilen Kommissionierroboters (R) integriert ist.

14. Mobiler Kommissionierroboter (R) nach einem der Ansprüche 11 bis 13, **dadurch gekennzeichnet, dass** die Steuereinheit (E) dazu eingerichtet ist, Messdaten der Lastwaage (21) mit hinterlegten Stammdaten der Objekte (9) zu vergleichen und bei einer Abweichung der Messdaten von den Stammdaten eine Reaktionsfunktion des mobilen Kommissionierroboters (R) einzuleiten, insbesondere eine Fehlermeldung auszugeben.

15. Mobiler Kommissionierroboter (R) nach Anspruch 14, **dadurch gekennzeichnet, dass** in der Steuereinheit (E) ein Toleranzbereich einer Abweichung der Messdaten der Lastwaage (21) von den Stammdaten der Objekte (9) hinterlegt ist.

16. Mobiler Kommissionierroboter (R) nach einem der Ansprüche 11 bis 15, **dadurch gekennzeichnet, dass** die Steuereinheit (E) dazu eingerichtet ist, aus Messdaten der Lastwaage (21) einen Lastschwerpunkt der Objekte (9) zu ermitteln.

17. Mobiler Kommissionierroboter (R) nach einem der Ansprüche 11 bis 16, **dadurch gekennzeichnet, dass** die Steuereinheit (E) dazu eingerichtet ist, aus Messdaten der Lastwaage (21) Schwingungen des Lasthandhabungsmanipulators (M) zu erkennen und diese durch gezielte Ansteuerung des Lasthandhabungsmanipulators (M) und/oder des mobilen Kommissionierroboters (R) zu kompensieren.

18. Mobiler Kommissionierroboter (R) nach einem der Ansprüche 11 bis 17, **dadurch gekennzeichnet, dass** die Steuereinheit (E) dazu eingerichtet ist, aus Messdaten der Lastwaage (21) Kollisionen des Lasthandhabungsmanipulators (M) und/oder des mobilen Kommissionierroboters (R) mit Hindernissen zu erkennen.

19. Mobiler Kommissionierroboter (R) nach einem der Ansprüche 11 bis 18, **dadurch gekennzeichnet, dass** die Steuereinheit (E) dazu eingerichtet ist, aus Messdaten der Lastwaage (21) ein Herunterfallen der Objekte (9) zu erkennen.

20. Mobiler Kommissionierroboter (R) nach einem der Ansprüche 11 bis 19, **dadurch gekennzeichnet, dass** die Steuereinheit (E) dazu eingerichtet ist, aus Messdaten der Lastwaage (21) fehlerhafte Objekte (9), insbesondere eine Leckage eines Packstücks und/oder einen fehlerhaften Füllstand eines Packstücks, zu erkennen.

21. Mobiler Kommissionierroboter (R) nach einem der Ansprüche 11 bis 20, **dadurch gekennzeichnet, dass** die Steuereinheit (E) dazu eingerichtet ist, aus Messdaten der Lastwaage (21) ein Absetzen der Objekte (9) an einer Zielposition zu erkennen.

22. Mobiler Kommissionierroboter (R) nach einem der Ansprüche 14 bis 21, **dadurch gekennzeichnet, dass** die Steuereinheit (E) über ein Computerprogramm mit einem selbstlernenden Algorithmus verfügt, der eine Anpassung der hinterlegten Stammdaten der Objekte (9) an aktuelle Daten ermöglicht.
